# FASCICULE DE BREVET EUROPEEN

(11) **EP 0 723 043 B1**
(45) Date de publication et mention de la délivrance du brevet: **16.06.1999**
(21) Numéro de dépôt: 95470032.4
(22) Date de dépôt: 04.10.1995
(51) Int. Cl.: D04H 1/42, D04H 13/00

(54) **Structure composite formée de dérivés d'acide lactique.**
Verbundstruktur aus Milchsäure-Derivate
Composite structure made from derivates of lactic acid

(30) Priorité: 12.10.1994 FR 9412333
(43) Date de publication de la demande: 24.07.1996
(73) Titulaire: FIBERWEB FRANCE SA, 68600 Biesheim (FR)
(72) Inventeur: Ehret, Philippe, 68320 Fortschwihr (FR); Guipouy, Philippe, F-68500 Guebwiller (FR); Lahtenkorva, Kimmo, F-68240 Kaysersberg (FR)
(74) Mandataire: Poupon, Michel

(56) Documents cités:
- EP-A- 0 510 998
- EP-A- 0 530 987
- EP-A- 0 597 427

## Description

La présente invention concerne une structure composite comprenant une ou plusieurs couches de non-tissé associées à un ou plusieurs films, ou une ou plusieurs couches de non-tissé associées entre elles.

Cette invention concerne également le procédé de fabrication de ladite structure composite et la méthode pour associer les différentes couches de ce composite.

Conventionnellement, lesdits produits composites se composent de polyoléfines. Les applications dans lesquelles ce type de composition est utilisé sont : couches-bébé, serviettes périodiques, vêtements de protection, masques et champs opératoires dans le domaine médical et quelques produits pour l'absorption et la filtration, la protection des plantes en agriculture et le paillage.

Ces produits à usage unique et jetables sont fabriqués avec des polymères, qui sont souvent des matières stables ne se dégradant pas dans la nature.

La quantité de déchets s'accroît continuellement sur toute la planète et l'environnement est de plus en plus pollué. Les produits usagés tels que les films, non-tissés pour l'hygiène (couches-bébé, serviettes périodiques...), pour les applications médicales (casaques, champs opératoires...), et pour l'agriculture (protection contre le gel, paillage...) constituent une grande partie des déchets solides.

L'utilisation de polymères dégradables, en particulier ceux qui sont biodégradables, constitue une des solutions à ce problème.

Il s'agit principalement de polymères dérivés d'acide lactique (PLA), (Boehringer Ingelheim : RESOMER), de polycaprolactone (PCL), (Union Carbide : TONE, Interox Chemicals : CAPA), polyhydroxybutyrate/valerate-copolymers (PHB/V), (Zeneca Bio Products : BIOPOL), acide polyglycolide PGA). Plusieurs brevets ou demandes de brevets existent dans ce domaine. Par exemple : EP-A-0 569 143, "Biodegradable disposable diaper" des inventeurs SHOWA DENKO K.K. concernant une couche-bébé totalement biodégradable dont le non-tissé en polyester dégradable est utilisé comme voile de surface perméable aux liquides et comme barrière anti-fuites.

La demande PCT/US 92/00229, "Novel polyesters and their use in compostable products such as disposable diapers" déposée par E.I. DU PONT DE NEMOURS AND COMPANY, concerne plusieurs types de produits jetables comprenant des fibres, films, mousses, etc... à base de nouveaux polyesters biodégradables.

Ces polymères sont bien connus actuellement dans le domaine médical. Il ont été utilisés comme matière première pour les sutures ; on peut se référer par exemple à : D.E. Cutright et all. dans son traité "Histologic comparison of polylactic and polyglycolic acid sutures", Oral Surg. 32, 165-173, 1971, pour différents types d'implants (vis, tiges, plaques) ; "polylactic acid for surgical implants" publié en 1966 par R.K. Kulkarni et all., Arch.Surg., 93, 839-843 ; Eds et all décrit plusieurs systèmes de diffusion contrôlée d'un principe actif dans "Biodegradable polymers as drug delivery systems : manufacturing methodology, release control and targeting prospects", J. Bioactive Compatible Polymers 1990, 5, 315-342 ; ainsi que la société finlandaise BIOSCIENCE Ltd qui fabrique des vis, clous, tiges et plaques (BIOFIX), destinés à consolider les fractures osseuses, à base de polymères dérivés d'acide lactique et d'acide polyglycolique.

Les polymères dérivés de l'acide lactique (PLA) semblent les plus prometteurs pour remplacer les polymères stables utilisés jusqu'à présent dans la composition des films et non-tissés. Les PLA offrent la possibilité d'obtenir des propriétés mécaniques et physico-chimiques qui sont comparables à celles des polymères conventionnels (Brevets US 4743257, 1988 et 4968317, 1990). Contrairement aux autres polymères biodégradables, il est très facile de fabriquer à des coûts relativement bas, des fibres à titre fin à partir de polymères dérivés de PLA (Ahamad Y.A. Khan et all., "Meltprocessing of poly(lactide) resin into nonwovens", TANDEC, University of Tennessee et demande de brevet français FR-A-2 709 500, 2 août 1993, et demande de brevet européen EP-A-0 637 641 "Non-tissé à base de polymères dérivés de l'acide lactique, procédé de fabrication et utilisation d'un tel non-tissé", FIBERWEB SODOCA).

Il existe également quelques brevets concernant des composites. Par exemple, MITSUI TOATSU CHEMICALS INC. a fait une demande de brevet le 12 mai 1992, EP-A-0 514 137, intitulée "Degradable lamination composition". Ce brevet concerne des polymères dérivés de PLA (y compris des copolymères de PLA et acide hydroxycarboxylic) utilisés pour le laminage avec du papier dans le domaine de l'industrie de l'emballage.

Et, en plus de leur propriété biodégradable, les polymères dérivés de PLA sont fabriqués à partir de matières renouvelables telles que le sucre de betterave ou le petit lait. Ainsi la fabrication de ces polymères n'affecte en rien l'équilibre naturel (effet de serre) et n'utilise pas de pétrole, énergie non renouvelable.

La présente invention concerne une structure composite à base de polymères dérivés de PLA. Cette structure composite est composée de couches de non-tissé et/ou de films. Chaque couche possède des propriétés mécaniques, effet barrière, absorption, filtration et isolation thermique pouvant être adaptées à chaque application en sélectionnant la composition adéquate de non-tissés et de films à base d'acide polylactique.

Habituellement un non-tissé "spun-bond" (filature continue), désigné dans la suite du texte pour l'abréviation SB, est utilisé comme support. Et dans cette configuration on ajoute un film destiné à apporter l'étanchéité, l'effet barrière et/ou une autre couche SB ou melt-blown (fondu-soufflé, désignation MB dans la suite du texte), pour apporter les propriétés de filtration/absorption et isolation thermique.

Plus particulièrement l'invention consiste en une structure composite comprenant au moins une couche de non-tissé et au moins une couche de film, caractérisée en ce que les couches sont composées de polymères thermoplastiques dérivés exclusivement de l'acide lactique.

Selon l'application, on utilise un dérivé d'acide lactique choisi dans l'ensemble (acide lactique D, acide lactique L), ou un dérivé d'acide lactique D et L, ou un mélange d'acide lactique L et d'acide lactique D.

De préférence, le polymère, le copolymère, ou le mélange de polymères a un poids moyen moléculaire compris entre 10.000 et 1.000.000.

De préférence également, on réalise toutes les couches de non-tissé de la structure selon l'invention par un procédé choisi dans l'ensemble (calandrage à chaud, aiguilletage, liage par jet d'eau, liant chimique, over-blowing, extrusion de film).

Selon le procédé de fabrication, le type de soudure, ou le type de polymère utilisé, les couches de non-tissé et film qui composent une structure selon l'invention présentent des propriétés individuelles particulières.

On comprendra mieux l'invention à l'aide de la description qui suit faite en référence aux figures annexées suivantes :
- **figure 1** : schéma montrant un procédé de fabrication dit "spund-bond" d'une nappe de non-tissé,
- **figure 2** : schéma montrant un procédé de fabrication dit "melt-blown" d'une nappe de non-tissé,
- **figure 3** : schéma montrant la constitution d'un non-tissé trilaminé selon l'invention pour application médicale,
- **figure 4** : schéma montrant la constitution d'une structure composite laminée selon l'invention pour application dans l'hygiène,
- **figures 5 et 6** : schémas montrant deux procédés d'obtention d'une structure composite selon l'invention pour l'agriculture.

Ladite invention concerne une structure composite à plusieurs couches, utilisant du ou des polymère(s) à base de PLA. Ceux-ci se composent de L polylactide pur (PLLA), de D polylactide pur (PDLA), de copolymères de polylactide D-L dont le ratio varie de 0 % à 100 %, ainsi que de mélanges des polymères mentionnés.

Le poids moléculaire moyen du polymère peut varier de 10.000 à 1.000.000 ou de préférence de 40.000 à 600.000. Une dégradation importante s'effectuant pendant la fusion, le poids moléculaire ne devra pas être inférieur. Un poids moléculaire plus élevé pourrait occasionner une viscosité plus élevée pendant la fusion.

La matière première (polymère(s) dérivé(s) de PLA), utilisée dans cette invention pourrait contenir un plastifiant dans des proportions de 0.1 à 15 % et/ou de 0.1 à 20 % de monomère lactique et/ou de 0.01 à 5 % de différents types de stabilisants, pigments et autres colorants.

Chaque couche dudit produit composite à plusieurs couches pourrait être réalisée en utilisant différentes compositions de matières premières à base de PLA et différents additifs.

Ledit composite se compose d'au moins une couche. Chacune de ces couches est soit un voile de non-tissé soit un film, de sorte que le composite comporte au moins un non-tissé. Chaque couche est destinée à un usage spécifique. Dans le cas d'un champ opératoire par exemple, ledit composite comporte une couche de non-tissé ayant des propriétés d'absorption et de confort, et une couche de film avec effet barrière (barrière virale). Lesdites compositions, particulièrement MB et SB, peuvent également être utilisées dans les serviettes périodiques (brevet US 4 578 069, 1986 utilisant un composite basé sur des polyoléfines), ou des feuillets de stérilisation (brevet US 4 766 029, 1988 utilisant un trilaminé SB + MB + SB).

Dans la présente invention, le voile de non-tissé est une matière analogue à un tissu, fabriquée sans tissage ni tricotage, ayant une structure de fibres orientées. Les fibres peuvent être soit continues, soit d'une longueur variant de 5mm à 500 mm. De préférence, le titre des fibres se situe de 0.05 à 20 dtex.

Le(s) voile(s) peut (peuvent) être soudé(s) ou non soudé(s). Le soudage peut s'effectuer par aiguilletage, jets d'eau, liant chimique ou thermosoudage.

Il exite différents procédés de type SB pour fabriquer des voiles de non-tissé tels que Lurgi , S-Tex et le procédé MB (fondu-soufflé).

On décrit d'abord la fabrication d'une nappe de type SB composant l'invention.

La nappe SB apporte de bonnes propriétés mécaniques à la structure composite (résistance, allongement, souplesse). Elle peut également être utilisée pour l'absorption et la filtration. Dans certaines applications où elle constitue la couche de surface, elle apporte la douceur et le confort.

Dans ce procédé, le polymère est fondu et extrudé au moyen d'une extrudeuse à simple ou double vis, à une température qui se situe de préférence entre 140 et 280°C et, est acheminé vers une pompe de filature qui est normalement une pompe à engrenage. La plupart du temps, un filtre et un mélangeur statique sont installés avant les pompes.

Après les pompes, le polymère fondu passe à travers le filtre jusqu'à la filière comportant des trous variant de préférence de 0.2 à 2.0 mm et particulièrement de 0.4 à 1.0 mm. Le polymère est filé à travers la filière jusqu'à l'installation de refroidissement et d'étirage. Le refroidissement peut s'effectuer au moyen d'air refroidi, à une température variant de préférence entre 0 et 40°C et la vitesse variant de 0.1 à 5/s, l'étirage peut s'effectuer par aspiration d'air ou air pulsé à travers le système d'étirage. Le système d'étirage peut comporter une fente ou peut être constitué par une série de tubes ou fentes. La vitesse de l'air d'étirage se situe de préférence entre 10 et 400 m/s. Dans le système d'étirage, les fibres obtenues ont un diamètre décroissant et une structure orientée. Le ratio d'étirage est généralement de 1.1 à 20 fois, de préférence de 2 à 15 fois. Dans la couche SB le titre des fibres se situe de préférence entre 0.5 et 20 dtex, plus particulièrement de 1 à 10 dtex.

Le système de filature est suivi d'un système de dépose qui couche les fibres au hasard sur le tapis. Le tapis achemine la nappe de fibres vers une calandre chauffée à une température variant de préférence de 40 à 160° C, plus particulièrement de 60 à 110°C. Avant le calandrage, les autres nappes seront juxtaposées pour former le composite, par exemple : une autre nappe SB, une nappe MB ou les deux, et/ou une couche de film.

Le poids de base pourra être ajusté selon la vitesse. Il se situe généralement entre 5 à 200 g/m2 en fonction de l'application.

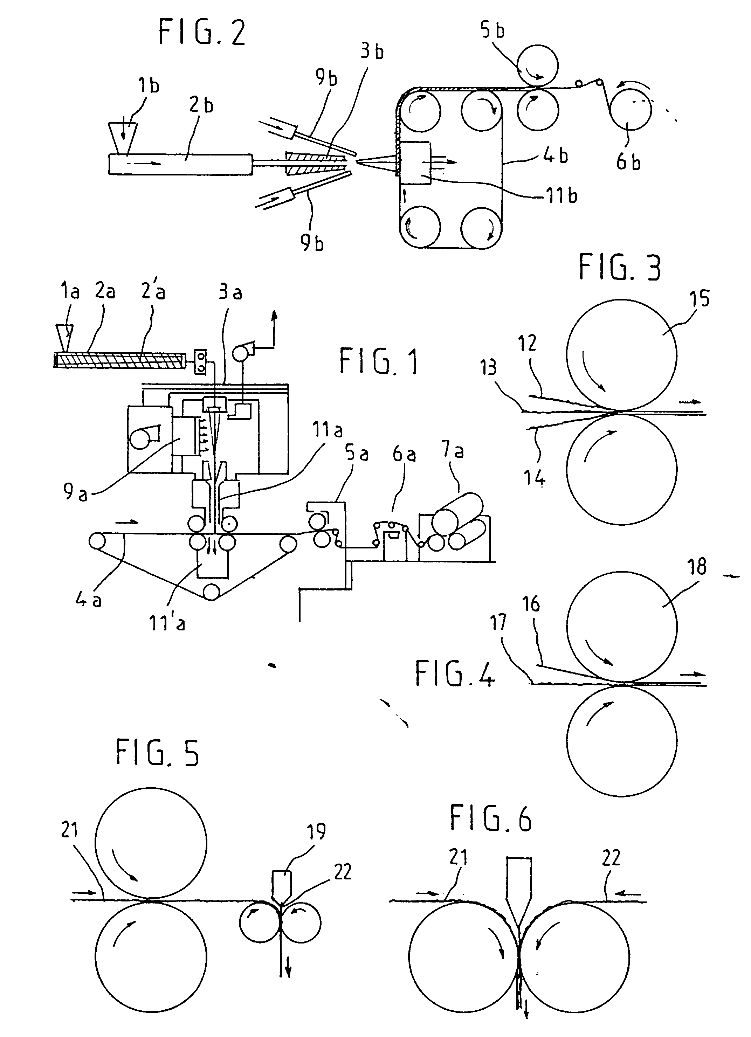

Le schéma de la figure 1 concerne une présentation du procédé SB (i.e. S-Tex) : (la) trémie pour matière première, (2a) extrudeuse, (2'a) vis, (3a) filière, (4a) tapis, (5a) calandre, (6a) système de guidage de la nappe et de réglage de tension d'enroulement, (7a) enroulement, (9a) système de refroidissement des fibres, (11a) fente d'étirage, (11'a) aspiration de l'étirage.

La nappe MB de ladite structure composite est destinée à apporter des propriétés telles que : absorption, filtration et/ou isolation thermique, douceur et confort. Elle permet également d'adapter la perméabilité du composite. Le procédé MB comprend également une extrudeuse destinée à fondre le polymère. Les températures se situent de préférence entre 150 et 280°C. Le polymère est véhiculé de l'extrudeuse à la filière. La filière ne comporte qu'une seule rangée de trous. Les trous ont un diamètre de 0.2 à 2 mm.

Une pulsion d'air générée des deux côtés de la rangée de trous projette le polymère sous forme de fibres sur la nappe qui défile. Le titre des fibres se situe de 0.05 à 2 dtex. Le poids de base de la nappe MB est régulé en fonction de la vitesse du tapis.

On décrit à présent la fabrication d'une nappe MB pouvant être utilisée dans l'invention.

La nappe MB peut être déposée directement sur la nappe SB. Ce procédé s'appelle "over-blowing". Dans ce procédé, le système SB est installé avant le système MB, les deux étant installés avant la calandre. La calandre réalise le thermosoudage des deux nappes.

Le schéma de la figure 2 représente le procédé MB : (1b) trémie matière première, (2b) extrudeuse, (3b) filière, (4b) tapis de formation, (5b) calandre, (6b) enrouleuse, (9b) soufflage, (11b) aspiration.

La couche de film de ladite structure composite est destinée à apporter des propriétés telles que : barrières aux liquides et bonne drapabilité. Le film peut cependant être poreux (brevet US 5 208 098, 1993) et dans ce cas il est perméable et absorbant.

On décrit enfin la fabrication d'un film composant l'invention.

Le film est déposé sur la structure composite par extrusion. La température de l'extrudeuse se situe de 150 à 280°C et la fente de la filière de 0.2 à 2 mm. La couche de film peut être extrudée séparément et soudée au composite par calandrage, seule une structure non-tissée préalablement calandrée pouvant y être associée, soit le film extrudé peut être utilisé pour souder des couches non-tissées séparées. L'épaisseur du film ou des films de ladite structure composite se situe de préférence de 0.001 à 1.0 mm.

Il existe plusieurs manières de fabriquer ladite structure composite selon l'invention par exemple :
1. Le non-tissé est lié thermiquement, (par exemple calandrage ou lamination), par aiguilletage, jets d'eau, over-blowing (MB) ou liant chimique (fig. 3 : 1. -3 non-tissés, 4. unité de soudage).
2. Le non-tissé lié par thermosoudure, aiguilletage, jets d'eau, over-blowing (MB) ou liant chimique est associé au(x) film(s) par lamination, soit par calandrage (fig. 4 : 1. non-tissé, 2. film, 3. unité de soudage).
3. Le non-tissé lié par thermosoudure, ou aiguilletage, ou jets d'eau, ou over-blowing (MB) ou liant chimique est associé au(x) film(s) par extrusion/enduction (fig. 5 : 1. non-tissé soudé, 2. filière d'extrusion, 3. film).

On décrit ci-après, à titre d'exemples non limitatifs, trois structures de non-tissé conformes à l'invention.

### Exemple 1 : Non-tissé trilaminé pour application médicale (voir figure 3).

Cette structure composite est totalement basée sur des PLA (précisément PLLA), fabriquée sur une ligne de production au moyen de trois fentes différentes : en premier une installation (SB) délivrant une nappe (12), en second une installation MB délivrant une nappe (13) et en dernier une autre installation SB délivrant une nappe (14). Ces installations se suivent en séquence et une calandre (15) soude les différentes nappes entre elles.

La première nappe SB (12) a un grammage de 10 - 20 g/m2 et les fibres ont un titre de 1.5 à 2.5 dtex. La nappe MB (13) a un poids de 5.0 à 15 g/m2 et un titre de 0.1 à 0.3 dtex. Le poids de la deuxième nappe SB (14) se situe entre 10 et 20 g/m2 et les fibres ont un titre de 1.5 à 3.0 dtex. Ainsi le poids total se situe de 25 à 55 g/m2. La surface soudée est de l'ordre de 8 à 15 % et la température de calandrage entre 65°C et 120°C, selon le type de matière première, les additifs et la vitesse utilisée. La résistance de ce composite se situe entre 40 et 100 N/5cm et l'allongement à la rupture de 30 à 60 %.

Les nappes SB (12, 14) de ladite structure composite améliorent la résistance et l'allongement, ainsi que le confort et les propriétés absorbantes. Certains additifs permettent d'obtenir des nappes SB hydrophiles ou hydrophobes.

La nappe MB (13) est destinée à apporter la propriété barrière aux liquides, mais n'a pas cependant un effet barrière aux gaz (structure aérée). La nappe MB placée entre des nappes SB accroît la souplesse et le confort de ladite structure composite.

Ce trilaminé peut trouver des applications dans les vêtements de protection (face interne hydrophile, face externe hydrophobe) dans les blocs opératoires (casaques et champs opératoires).

Pour l'usage dans le domaine médical cette structure composite devra présenter des propriétés de résistance contre les irradiations utilisées au cours de la stérilisation. Le polymère dérivé de PLA peut être stabilisé contre les rayons gamma et beta (les doses normales utilisées en milieu médical étant de 25 ou 50 KGy) par l'adjonction de certains stabilisants. La réduction des propriétés mécaniques après stérilisation sera inférieure à 15 % en utilisant des stabilisants.

### Exemple 2 : Structure composite laminée pour application dans l'hygiène (voir figure 4).

Cette structure composite est totalement basée sur des PLA (précisément PLLA ayant un poids moléculaire moyen de 30.000 à 150.000 avec Adpack stabilisant la température) et se compose de deux couches (16, 17) une nappe SB et une nappe MB.

Les nappes sont soudées par calandrage avec une surface de soudage de 9 à 15 %. La température de la calandre (18) devrait être un peu plus basse sur la face MB (environ 10 à 20°C en moins).

La nappe SB a un poids de 15 à 25 g/m2 et la nappe MB de 5 à 10 g/m2. Le poids total se situera de 20 à 35 g/m2, la résistance de 25 à 50 N/m2 et l'allongement à la rupture de 30 à 50 %.

Ladite structure composite est adaptée à cette application. La nappe SB apporte des propriétés mécaniques satisfaisantes et sert de support ; la nappe MB a un effet barrière aux liquides mais peut être perméable à la vapeur.

### Exemple 3 : Structure composite pour l'agriculture (voir figures 5 et 6).

La structure composite basée sur PLA, destinée à l'usage en agriculture comporte un voile SB (21) et une couche de film (22). La structure peut être fabriquée par extrusion/enduction (19) d'une couche de film (22) sur la nappe SB (figure 5) ou en laminant ces deux couches (21, 22) ensemble par thermosoudage (figure 5) un colorant noir (carbon black 0.5 - 1.5 % en poids) est utilisé pour les deux couches afin d'obtenir une structure opaque et adaptée au paillage (brevet US 3 580 196, 1971 utilisant une feuille plastique non dégradable).

Dans l'application pour le paillage, la nappe SB apporte la résistance et le film apporte l'étanchéité. De plus, lorsque la couche SB constitue la face extérieure, celle-ci sèche plus rapidement après la pluie, ce qui permet de conserver les fraises en bon état, par exemple. Par ailleurs, le film étanche empêche le dessèchement du sol. La couleur noire constitue un barrage au soleil et empêche la croissance des mauvaises herbes. En résumé, dans ce cas, la biodégradabilité offre les avantages suivants : le produit pour paillage peut être laissé en place et il se dégradera avec le temps (fonction modulée de 2 à 36 mois), il peut également être enlevé et enseveli, ou destiné au compostage avec une dégradation de plusieurs semaines.

Ladite structure composite a de préférence un poids se situant de 15 à 75 g/m2 et une épaisseur de film de 0.01 à 0.10 mm selon les spécifications en terme de propriétés et de durée de vie. Par exemple, le produit pour paillage contenant 1 % en poids de noir de carbone, ayant un poids de 50 g/m2 pour la nappe SB et une épaisseur de film de 0.025 mm, présente les propriétés suivantes :
- Allongement à la rupture : 40 à 60 %,
- Résistance MD : 110 à 160 N/m2.

La durée de vie pourra être modulée en utilisant un additif stabilisant aux UV.

D'une manière préférentielle, une structure selon l'invention présente les caractéristiques suivantes :
- le polymère, ou copolymère, ou mélange de polymères, dérivé(s) de l'acide lactique a un poids moyen moléculaire compris entre 10.000 et 1.000.000,
- les titres des filaments composant chaque couche de non-tissé qui compose la structure se situent entre 0.05 et 20 dtex,
- l'épaisseur de chaque film de la structure se situe entre 0.001 et 1 mm,
- toutes les couches de non-tissé qui la composent sont fabriquées selon un procédé choisi dans le groupe (SB, voie sèche, voie humide, MB),
- on soude l'une à l'autre en ligne continue ou séparément toutes les couches de non-tissé et de film qui composent ladite structure.

## Revendications

1. Structure composite comprenant au moins une couche de non-tissé et au moins une couche de film, caractérisée en ce que toutes les couches sont composées de polymères thermoplastiques tous dérivés de l'acide lactique.

2. Structure composite selon la revendication 1, caractérisée en ce que l'acide lactique est choisi dans l'ensemble (acide lactique D, acide lactique L).

3. Structure composite selon la revendication 1, caractérisée en ce que l'acide lactique est un acide lactique D et L.

4. Structure composite selon la revendication 1, caractérisée en ce que l'acide lactique est un mélange d'acide lactique L et d'acide lactique D.

5. Structure composite selon la revendication 1, caractérisée en ce que l'élément du groupe (polymère, copolymère, mélange de polymères) a un poids moyen moléculaire compris entre 10.000 et 1.000.000.

6. Structure composite selon l'une quelconque des revendications 1 à 5, caractérisée en ce que les titres des filaments composant chaque couche de non-tissé qui compose la structure se situent entre 0.05 et 20 dtex.

7. Structure composite selon l'une quelconque des revendications 1 à 6, caractérisée en ce sens que l'épaisseur de chaque film de la structure se situe entre 0.001 et 1 mm.

8. Structure composite selon l'une quelconque des revendications 1 à 7, caractérisée en ce que toutes les couches de non-tissé qui la composent sont fabriquées selon un procédé choisi dans le groupe (SB, voie sèche, voie humide, MB).

## Patentansprüche

1. Verbundstruktur bestehend aus zumindest einer Schicht einer Textilverbundware und zumindest einer Schicht eines Films, **dadurch gekennzeichnet**, daß alle Schichten aus thermoplastischen Polymeren bestehen, die alle von Milchsäure abgeleitet sind.

2. Verbundstruktur gemäß Anspruch 1, dadurch gekennzeichnet, daß die Milchsäure aus der Menge (D-Milchsäure, L-Milchsäure) ausgewählt ist.

3. Verbundstruktur gemäß Anspruch 1, dadurch gekennzeichnet, daß die Milchsäure eine D- und L-Milchsäure ist.

4. Verbundstruktur gemäß Anspruch 1, dadurch gekennzeichnet, daß die Milchsäure eine Mischung aus der L-Milchsäure und der D-Milchsäure ist.

5. Verbundstruktur gemäß Anspruch 1, dadurch gekennzeichnet, daß das Element der Gruppe (Polymer, Copolymer, Polymermischung) ein mittleres Molekulargewicht zwischen einschließlich 10.000 und 100.000 aufweist.

6. Verbundstruktur gemäß einem der vorhergehenden Ansprüche 1 bis 5, dadurch gekennzeichnet, daß die Titer der Fasern, die jede Schicht der Textilverbundware bilden, die die Struktur ausbildet, zwischen 0,05 und 20 Dtex liegen.

7. Verbundstruktur gemäß einem der Ansprüche 1 bis 6, dadurch gekennzeichnet, daß die Dicke jedes Films der Struktur zwischen 0,001 und 1 mm liegt.

8. Verbundstruktur gemäß einem der Ansprüche 1 bis 7, dadurch gekennzeichnet, daß alle Textilverbundwarenschichten, die sie ausbilden, gemäß einem Verfahren hergestellt sind, das aus der Gruppe (SB, Trockenverfahren, Naßverfahren, MB) ausgewählt ist.

## Claims

1. Composite structure comprising at least one layer of non-woven fabric and at least one layer of film, characterised in that all of the layers are composed of thermoplastic polymers, all derived from lactic acid.

2. Composite structure according to claim 1, characterised in that the lactic acid is selected in the entirety (lactic acid D, lactic acid L).

3. Composite structure according to claim 1, characterised in that the lactic acid is a lactic acid D and L.

4. Composite structure according to claim 1, characterised in that the lactic acid is a mixture of lactic acid L and lactic acid D.

5. Composite structure according to claim 1, characterised in that the element of the group (polymer, copolymer, mixture of polymers) has a mean molecular weight of between 10,000 and 1,000,000.

6. Composite structure according to any one of claims 1 to 5, characterised in that the titers of the filaments composing each layer of non-woven fabric which makes up the structure are between 0.05 and 20 dtex.

7. Composite structure according to any one of claims 1 to 6, characterised in that the thickness of each film of the structure is between 0.001 and 1 mm.

8. Composite structure according to any one of claims 1 to 7, characterised in that all of the layers of non-woven fabric which make up the structure are manufactured in accordance with a method selected from the group (SB, dry method, wet method, MB).
